# FASCICULE DE BREVET EUROPEEN

(11) **EP 0 249 546 B1**
(45) Date de publication et mention de la délivrance du brevet: **15.09.1993**
(21) Numéro de dépôt: 87401280.0
(22) Date de dépôt: 05.06.1987
(51) Int. Cl.: C03C 27/06, H01J 9/26

(54) **Machine de dépôt de produit sur une surface plane et horizontale, en particulier machine de dépôt de verre fritté sur cônes de tubes cathodiques**
Maschine zum Absetzen eines Produktes auf eine flache und horizontale Fläche, insbesondere Maschine zum Absetzen von gesintertem Glas auf Kathodenröhren
Machine for depositing a product on a plane and horizontal surface, in particular a machine for depositing fritted glass on cones of cathodic tubes

(30) Priorité: 13.06.1986 FR 8608586
(43) Date de publication de la demande: 16.12.1987
(73) Titulaire: THOMSON TUBES & DISPLAYS SA, 92400 Courbevoie (FR)
(72) Inventeur: Ferragni, Clemente, F-75008 Paris (FR)
(74) Mandataire: Einsel, Robert, Dipl.-Ing.

(56) Documents cités:
- BE-A- 675 868
- FR-A- 2 282 161
- FR-A- 2 432 214
- GB-A- 2 161 403

## Description

La présente invention se rapporte à une machine de dépôt sur une surface plane et horizontale, en particulier une machine de dépôt de verre fritté sur cônes de tubes cathodiques.

Les machines de dépôt de verre fritté (connu en anglais sous la dénomination "frit") actuellement utilisées comportent un support rotatif de cône coopérant avec un applicateur de verre fritté comportant essentiellement un réservoir terminé à sa partie inférieure par une buse. Cet applicateur est solidaire d'une roulette de guidage se déplaçant sur la périphérie interne légèrement cônique de la partie supérieure (évasée) du cône. Le cordon de verre fritté déposé sur la tranche (face frontale supérieure destinée à être collée sur la dalle) du cône par ces machines connues n'est pas régulier pour les raisons suivantes. Le support rotatif du cône ne permet pas de positionner le cône de façon que sa tranche soit toujours rigoureusement horizontale, ce qui fait que si cette horizontalité n'est pas obtenue, d'une part, la distance entre la buse de l'applicateur et cette tranche est variable, donc l'angle d'incidence, par rapport à cette tranche, du flot de verre fritté sortant de la buse est variable et entraîne des variations correspondantes de l'épaisseur et/ou de la largeur du cordon déposé sur la tranche ; d'autre part, la roulette de guidage suit alors un trajet dont la distance à la surface de la tranche varie, ce qui fait que l'axe du cordon déposé ne suit pas assez fidèlement l'axe longitudinal de la surface de la tranche. En outre, même si le cône est bien disposé sur son support rotatif, mais que la surface périphérique interne de la partie supérieure du cône présente des irrégularités ou défauts sur le trajet de la roulette, celle-ci les répercute sur le trajet du cordon déposé. Enfin, une même machine est difficilement adaptable à différentes dimensions de tubes cathodiques.

La présente invention a pour objet une machine permettant de déposer le plus rapidement possible un cordon de verre fritté sur la tranche d'un cône de tube cathodique, cordon qui présente une section la plus régulière possible, et qui suivra le plus régulièrement possible l'axe longitudinal de cette tranche, une même machine devant s'adapter sans modifications à des tubes cathodiques de tailles différentes.

La machine conforme à l'invention comprend :
(a) des premiers moyens pour maintenir un objet ayant une surface plane dans une position de travail dans laquelle la surface plane est horizontale :
(b) une tuyère unique capable de déposer un produit à une vitesse déterminée, ladite tuyère unique étant disposée au-dessus de la surface plane de l'objet lorsque l'objet est dans sa position de travail et
(C) des seconds moyens pour déplacer ladite tuyère par rapport à la surface plane de l'objet dans une voie fermée ayant des sections droites et au moins un coin arrondi, **caractérisé par** lesdits seconds moyens qui sont adaptés
   (i) pour déplacer ladite tuyère unique à une vitesse constante Vn pendant que ladite tuyère se déplace le long des sections droites de la voie fermée, pour augmenter la vitesse de ladite tuyère en commençant au début d'au moins un coin arrondi cité pour atteindre une vitesse maximum Vm au milieu d'au moins un coin arrondi cité et pour diminuer la vitesse de ladite tuyère unique à la valeur Vn à la fin d'au moins un coin arrondi cité, l'augmentation et la diminution de vitesse étant accomplies de manière symétrique et au moins approximativement gaussienne et
   (iii) au commencement d'un circuit autour de la voie fermée pour déplacer ladite tuyère unique sur une courte distance à la vitesse 2Vm en obtenant ainsi la moitié du dépôt normal du produit sur cette courte distance et, à la fin du circuit autour de la voie fermée, de déplacer ladite tuyère unique sur la même courte distance à la vitesse 2Vn en obtenant à nouveau la moitié du dépôt normal du produit sur cette courte distance.

GB-A-2 161 403 montre, dans un modèle fermé, deux buses qui se déplacent dans des directions opposées au-dessus d'une surface du bord de scellement de la partie de l'entonnoir de tube cathodique, ladite surface étant disposée horizontalement. Des tuyaux et soufflets flexibles conduisent sous pression une émulsion de fritte depuis l'orifice à valve d'un réservoir jusqu'aux buses. Les soufflets sont contractés et gonflés conformément à l'ouverture et fermeture des valves afin de réduire le délai de début et d'arrêt du débit.

FR-A-2 432 214 montre deux postes d'axe séparés conçus pour recevoir les entonnoirs de tube cathodique et un chariot qui est mobile entre les deux postes et comprend deux dispositifs qui distribuent le matériau de scellement. Chaque entonnoir pivote de 185°, opération par laquelle il y a un chevauchement lors de l'application de frit qui doit être écarté par un mécanisme de commande.

FR-A-2 282 161 montre un procédé permettant d'appliquer un verre fritté sur le bord d'étanchéité de la partie de l'entonnoir du tube-image munie de moyens pour varier la vitesse de rotation de la partie de l'entonnoir lors de chaque rotation de cette dernière si bien que la vitesse relative entre la buse distribuant le frit et la partie du bord d'étanchéité positionnée en-dessous est inversement proportionnelle à la largeur de cette partie de bord de scellement.

DE-A-675 868 montre un procédé suiveur qui suit simultanément à la fois les bords intérieurs et extérieurs de la face de scellement d'une buse de tube-image afin de garder le centre de la buse qui distribue le frit perpendiculaire à la ligne médiane de la face de scellement tournée vers le haut pendant la rotation de l'entonnoir. Le procédé essaie de compenser l'augmentation ou la baisse des irrégularités, ainsi que les variations de largeur, de la face de scellement de la buse.

La présente invention sera mieux comprise à la lecture de la description détaillée d'un mode de réalisation pris comme exemple non limitatif et illustré par le dessin annexé:
- la figure 1 est une vue de côté partielle d'un mode de réalisation de la machine de l'invention ;
- les figures 2 et 3 sont des vues partielles de dessus de la machine de la figure 1;
- la figure 4 est une vue en coupe schématique du dépôt de frit effectué par la machine de la figure 1 dans la zone initiale et finale de dépôt;
- la figure 5 est un diagramme de la vitesse de déplacement du dispositif applicateur de frit de la machine de la figure 1 en fonction de sa position angulaire au-dessus d'un coin de cône.

la machine décrite ci-dessous est utilisée pour déposer un cordon de "frit" sur la tranche d'un cône de tube cathodique, mais il est bien entendu qu'elle peut être utilisée pour réaliser des dépôts d'autres matériaux sur diverses surfaces, en suivant un tracé déterminé, la section droite du cordon déposé pouvant être constante ou varier selon une loi déterminée.

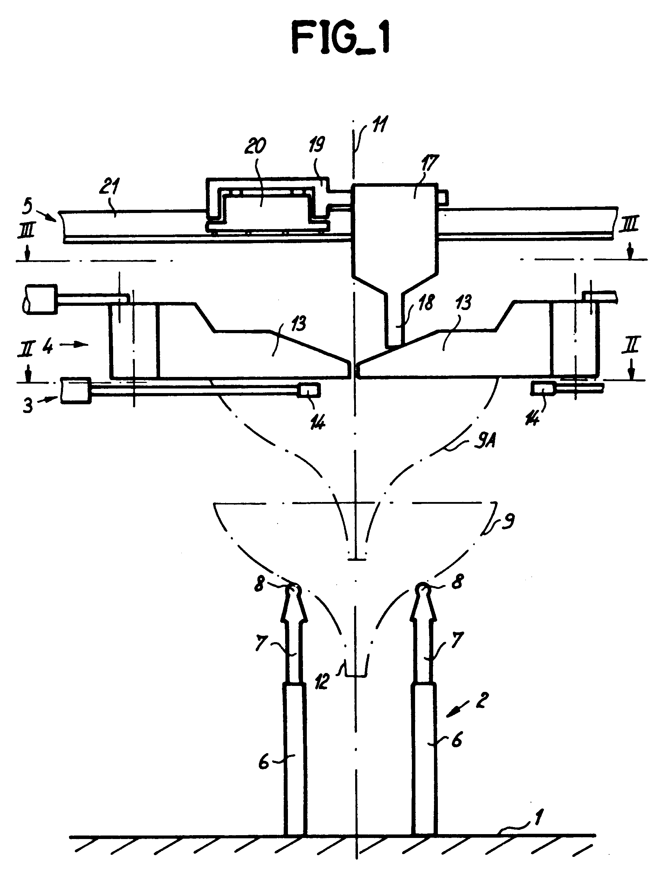

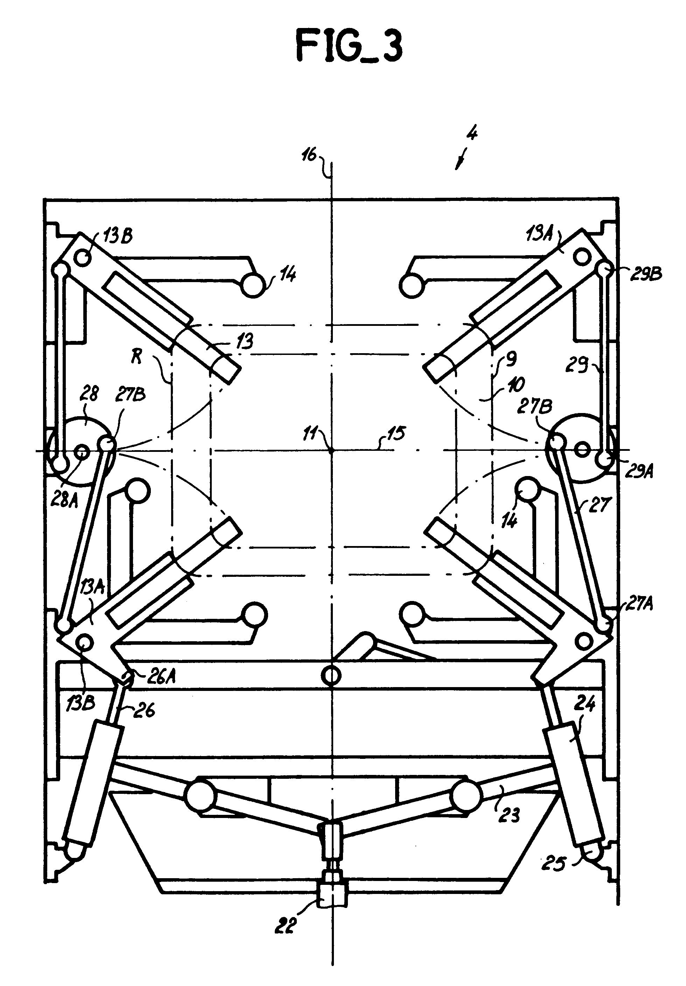

La machine de l'invention comporte un bâti 1 supportant essentiellement un dispositif 2 élévateur de cônes (figure 1), un dispositif 3 de centrage de cônes (figures 1, 2 et 3), un dispositif 4 de butées mobiles (figures 1 et 3), et un dispositif 5 applicateur de verre fritté (figure 1).

Le dispositif élévateur 2 comporte plusieurs, par exemple quatre, vérins 6 fixés verticalement sur le bâti 1, leurs tiges de sortie 7 étant dirigées vers le haut. A l'extrémité des tiges 7 on fixe des dispositifs de support 8 destinés à supporter un cône 9 de tube cathodique de façon que sa tranche 10 (c'est-à-dire sa face frontale destinée à être collée contre la face homologue d'une dalle) soit dirigée vers le haut et soit horizontale. Le cône 9 étant déposé sur ces supports 8, par exemple par des moyens automatiques de manutention, sans orientation très prècise, la forme et la disposition de ces supports 8 doivent permettre de centrer facilement ce cône par rapport à un axe vertical de référence 11 autour duquel sont régulièrement disposés les vérins 6. Bien entendu, le cône est déposé sur les supports 8, les tiges 7 des vérins 6 étant en position basse, de façon que son axe soit le plus voisin possible de l'axe 11, afin que l'étape ultérieure de centrage se fasse le plus aisément possible. Pour faciliter ce centrage, les supports 8 entrent en contact avec le cône le plus près possible de son col 12, sans toutefois en être trop près afin d'éviter toute chute du cône, et ce pour toutes les dimensions prévues de cônes. Selon une variante non représentée, les vérins 6 peuvent être rapprochés ou éloignés les uns des autres en fonction des dimensions des cônes. En outre, les supports 8 sont réalisés de façon à permettre un léger glissement du cône lors de son centrage par rapport à l'axe 11. Selon le mode de réalisation représenté sur la figure 1, ces supports 8 sont des boules.

Le dispositif élévateur 2 coopère avec le dispositif 4 de butées mobiles situé au-dessus de lui. Lors de la mise en place du cône sur les supports 8, et lors du dépôt du "frit", les tiges de butée 13 s'effacent en pivotant, mais il est également possible, selon une variante non représentée, de prévoir des butées rétractables non pivotantes, télescopiques ou se déplaçant simplement le long de leur propre axe.

Les tiges de butée 13, de section rectangulaire, au nombre de quatre par exemple, se déplacent horizontalement, et leurs faces inférieures sont coplanaires, le plan horizontal qu'elles forment étant le plan de référence pour la tranche 10. Lorsque le cône 9 est déposé sur les supports 8, les vérins 6 sont actionnés automatiquement et, par l'intermédiare des tiges 7, soulèvent le cône 9 jusqu'à ce qu'il vienne en butée contre les tiges de butée 13. Du fait que les supports 8 permettent un léger glissement du cône, sa face frontale 10, si elle n'était pas parfaitement horizontale à la mise en place du cône sur les supports 8 se redresse en venant en butée contre les tiges 3 (position 9A sur la figure 1). Bien entendu, les vérins 6 sont actionnés de façon que la face frontale 10 du cône vienne doucement en butée contre les tiges 13, et leur pression est maintenue tant que le cône n'est pas parfaitement centré par rapport à l'axe 11. L'étape de centrage du cône 9 peut se faire simultanément avec sa mise en butée contre les tiges 13 ou juste après.

Le centrage est réalisé à l'aide de plusieurs, par exemple six, roulettes de centrage identiques 14 appliquées contre la face externe du cône 9, un peu en-dessous du plan de sa face frontale 10. Les axes de ces roulettes sont verticaux, elles se déplacent toutes horizontalement, et leurs faces supérieures sont coplanaires. Si l'on considère le rectangle R à coins arrondis déterminé par l'intersection du plan des faces (supérieures par exemple) des roulettes 14 et du cône 9, et dans le cas où l'on utilise six roulettes 14, on dispose deux roulettes en vis-à-vis de chaque grand côté de ce rectangle et une seule en vis-à-vis de chaque petit côté. Dans le mode de réalisation représenté sur le dessin, ces roulettes ne se déplacent pas verticalement, mais selon une variante, non représentée, ces roulettes se déplacent également verticalement, en restant toujours coplanaires, en synchronisme avec les tiges 7 des vérins 6, de façon à centrer le cône dès qu'il est déposé sur les supports 8 et à monter avec lui jusqu'à ce qu'il vienne en butée contre les tiges 13.

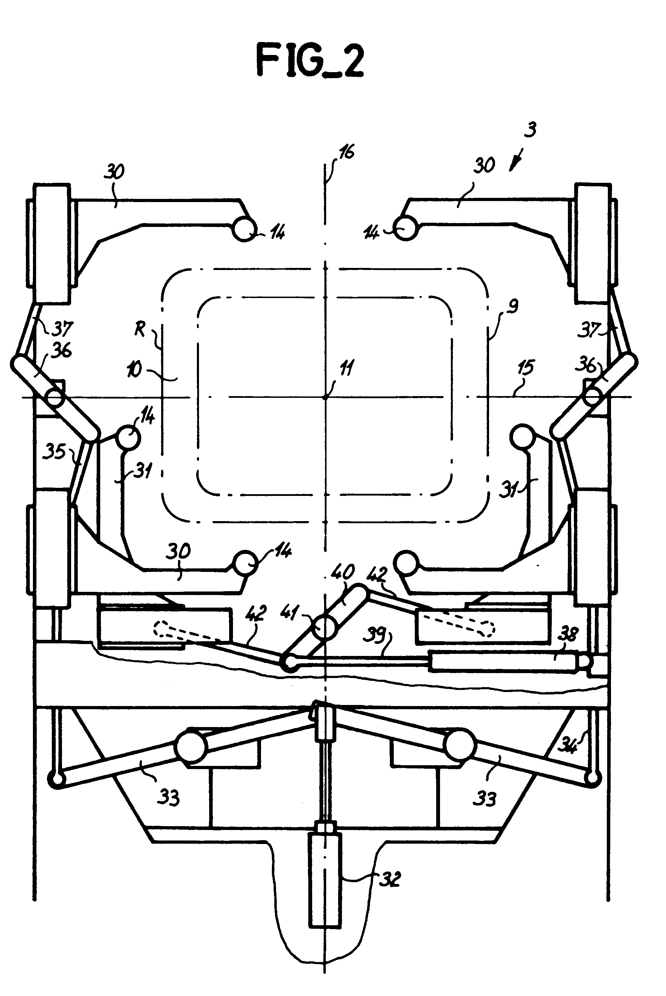

Bien entendu, pour bien centrer le tube par rapport à l'axe vertical 11, les roulettes relatives aux grands et petits côtés dudit rectangle R se déplacent symétriquement par rapport à deux plans verticaux passant sur cet axe 11, et respectivement perpendiculaires à ces petits et grands côtés. Sur les figures 2 et 3 on a représenté en traits interrompus mixtes les traces respectives 15, 16 de ces plans.

Selon une caractéristique avantageuse de l'invention, ces roulettes sont solidaires d'un dispositif de mesure simple, et de réalisation évidente pour l'homme de l'art, déterminant les dimensions standard (correspondant à la diagonale du tube fini) du cône présent sur les supports 8. Etant donné que les différences entre dimensions standard successives sont relativement importantes, ce dispositif de mesure n'a pas besoin d'être très précis, et est donc d'un faible prix de revient.

Le dispositif applicateur 5, représenté de façon simplifiée et partielle sur la figure 1 comporte essentiellement un réservoir 17 de "frit" se terminant à sa partie inférieure par une buse obturable 18. Le réservoir 17 est maintenu par un chariot mobile 19 de façon que l'extrémité de la buse 18 soit à une faible distance constante du plan de la surface frontale 10 du cône lorsque ce dernier est en position haute 9A. Le chariot 19 se déplace le long d'un premier rail 20, qui se déplace lui-même sur deux autres rails 21 (un seul de ces rails 21 est visible sur la figure 1) parallèles entre eux et perpendiculaires au rail 20. Ces trois rails sont situés au-dessus du plan de butée des tiges 13, et sont disposés de telle façon et sont de dimensions telles que la buse 18 puisse couvrir la surface frontale 10 du cône le plus grand envisageable.

Les mouvements du chariot 19 par rapport au rail 20, et du rail 20 par rapport aux rails 21 sont produits par tout dispositif approprié (par exemple par des moteurs entraînant des câbles par l'intermédiaire de poulies, par des moteurs linéaires dont les rails constitueraient l'induit, etc.). Ces dispositifs sont commandés de façon connue en soit par un calculateur qui peut ainsi faire exécuter à la buse 18 tout mouvement désiré. Bien entendu, les rails 20 et 21 et leurs moteurs peuvent être remplacés par tout dispositif assurant la même fonction (entraînement programmable de la buse 18 de l'applicateur).

On a représenté sur la figure 3 un exemple de réalisation d'un dispositif de commande des butées 13. Ces butées 13 sont montées sur des supports 13A pivotant en des points fixes 13B disposés symétriquement sur les prolongements des diagonales du rectangle R. Dans la suite de la description, les traces 15, 16 seront assimilées à des axes de symétrie. Ce dispositif de commande comporte essentiellement un vérin principal 22, disposé selon l'axe 16, commandant par l'intermédiaire de deux dispositifs de biellettes 23, pivotant à peu près en leurs milieux, les corps de deux vérins secondaires dont les extrémités fermées pivotent en des points fixes 25 symétriques par rapport à l'axe 16. Les tiges 26 des deux vérins 24 sont articulées en 26A sur les deux supports 13A les plus proches de ces deux vérins. Deux biellettes 27 pivotant en 27A (les points 26A, 13B et 27A sont sensiblement alignés pour chacun des deux supports 13A) sur ces deux supports 13A, pivotent à leur autre extrémité, en des points 27B sur des disques rotatifs 28 dont les centres 28A sont situés sur l'axe 15 symétriquement par rapport à l'axe 16. Deux autres biellettes 29, pivotant en 29A sur les disques 28 (les points 27B et 29A sont diamétralement opposés sur chaque disque 28) pivotent à leur autre extrémité en 29B sur les deux autres supports 13A, près de leurs axes de rotation 13B. Ainsi, le vérin 22 étant dans l'état représenté sur la figure 3 (tige rentrée), les cylindres 24 forment entre eux un angle aigu, leurs pistons étant rentrés. Les quatre tiges 13 convergent vers l'axe 11. Lorsque le cylindre 22 est actionné, son piston, par l'intermédiaire des biellettes 23, écarte les cylindres 24 de l'axe 16 jusqu'à ce qu'ils deviennent sensiblement parallèles entre eux, et simultanément leurs pistons sont actionnés en faisant sortir les tiges 26. Le mouvement des tiges 26 fait tourner les deux supports 13A correspondants en direction des disques 28. Les rotations de ces deux supports 13A entraînent des rotations en sens contraires des disques 28 respectifs sous l'effet des biellettes 27. Les rotations des disques 28 entraînent, par l'intermédiaire des biellettes 29, des rotations de mêmes sens des deux autres supports 13A correspondants qui se rapprochent également des disques 28. A la fin du mouvement du piston du cylindre 22, les quatre tiges de butée 13 sont parallèles entre elles et à l'axe 16, et permettent de dégager par le haut le cône 9 et d'en introduire un autre à sa place.

Le dispositif de centrage, représenté sur les figures 2 et 3 comporte, pour les quatre roulettes 14 situées en vis-à-vis des grands côtés du cône et se déplaçant vers l'axe 15 parallèlement à l'axe 16, des supports mobiles 30, et pour les deux autres roulettes 14 qui se déplacent vers l'axe 16, parallèlement à l'axe 15, deux supports mobiles 31. Les mouvements des quatre supports 30 sont commandés par un vérin 32 disposé selon l'axe 16. Ce vérin 32 actionne, par l'intermédiaire de deux biellettes 33, pivotant en leurs milieux, deux autres biellettes 34, pivotant en leurs deux extrémités et reliées chacune à un support 30, ces deux premiers supports 30 étant les plus proches du vérin 32. Chacun de ces deux supports 30 est relié à un autre support 30, se trouvant du même côté que lui par rapport à l'axe 16, par l'intermédiaire, sucessivement, d'une biellette 35, pivotant en ses extrémités, d'une biellette 36 pivotant en son centre situé sur l'axe 15 et à ses extrémités, et d'une biellette 37 pivotant en ses extrémités. Ainsi, grâce à l'articulation à biellettes 35, 36, 37 symétrique par rapport à l'axe 15, les supports 30 se rapprochent symétriquement de l'axe 15 lorsque la tige du vérin 32 sort de son cylindre, et permettent donc de centrer le cône 9 par rapport à cet axe.

Le dispositif de centrage 3 comporte un second vérin 38 dont l'axe est parallèle à l'axe 15. La tige 39 du vérin 38 forme une articulation avec une biellette 40 pivotant en son milieu sur un point 41 situé sur l'axe 16. Les extrémités de la biellette 40 sont reliées chacune par une biellette 42 à un support 31. L'articulation formée par les biellettes 40 et 42 est symétrique par rapport à l'axe 16. Ainsi, le vérin 38 commande les mouvements des supports 31 symétriquement par rapport à l'axe 16, ce qui permet de centrer le cône 9 par rapport à cet axe 16. Par conséquent, les actions des vérins 32 et 38 permettent de centrer le cône par rapport à l'axe 11 passant par l'intersection des axes 15 et 16 et perpendiculaire à ceux-ci. Lorsqu'un cône a été centré par le dispositif 3, les butées du dispositif 4 s'effacent et libèrent la place pour l'applicateur 5.

Bien entendu, les dispositifs de butée 4 et de centrage 3 peuvent être remplacés par des dispositifs équivalents assurant les mêmes fonctions.

Les dispositifs 3 et 4 peuvent être avantageusement commandés par le calculateur commandant les déplacements de l'applicateur 5. Contrairement à ce qui se passait dans les dispositifs de l'art antérieur, le dispositif applicateur n'a aucun contact mécanique avec le cône : le dispositif de centrage 3 détermine les dimensions standard du cône présent et le calculateur de commande de l'applicateur fait suivre à la buse 18 de l'applicateur un trajet standard fonction de la dimension standard du cône présent, ce trajet suivant de préférence l'axe longitudinal de la surface 10. Un tel dispositif permet de traiter des cônes de dimensions standard différentes les uns à la suite des autres. En outre, le cône étant immobile pendant le dépôt, et seul l'applicateur se déplaçant, le dépôt d'un cordon de "frit" peut se faire beaucoup plus rapidement que ce n'était le cas pour les machines de l'art antérieur dans lesquelles le cône tournait autour de son axe vertical.

Du fait que le plan de la face 10 du cône 9 reste horizontal et que ce cône est immobile, la distance entre la sortie de la buse 18 et cette face 10 est constante pendant l'application. On peut ainsi régler à une valeur optimale constante l'angle d'incidence du produit appliqué par rapport à la surface 10.

Selon une autre caractéristique de l'invention, on maintient constant le débit de produit à travers la buse 18. Pour déposer un cordon de section constante, l'applicateur doit se déplacer à vitesse constante Vn le long de trajets rectilignes, mais si l'on maintient cette vitesse le long des parties de trajets à faible rayon de courbure (coins arrondis de la surface 10 du cône), la section du cordon déposé augmente fortement dans ces parties de trajets. Pour garder une section constante du cordon dans ces parties, on augmente la vitesse de déplacement de l'applicateur, selon l'exemple de la figure 5 : en prenant comme origine des abscisss (0°) du diagramme de la figure 5 le début de la rotation de l'applicateur, on augmente progressivement la vitesse depuis la valeur initiale Vn jusqu'à une valeur maximale Vm pour une rotation de 45°, et on la fait décroître de façon symétrique jusqu'à la valeur initiale Vn qui est atteinte pour une rotation de 90°, l'allure de la courbe ainsi obtenue étant approximativent gausienne.

Au début du dépôt, qui se situe de préférence au milieu d'un grand côté de la surface 10, la vitesse de déplacement de l'applicateur passe d'une valeur nulle jusqu'à la vitesse nominale Vn (vitesse constante en trajet rectiligne). Si l'on ouvre la buse 18 au début du déplacement de l'applicateur, le début du cordon a une section supérieure à celle obtenue à la vitesse Vn, cette section variant en sens inverse de la variation de vitesse. Pour éviter cela, on peut ouvrir la buse lorsque l'on estime que la vitesse Vn est atteinte, mais une telle estimation n'est pas très précise, et peut varier par exemple avec la quantité de produit restant dans le réservoir 17. En outre, le phénomène inverse se produit lorsque l'applicateur revient à son point de départ, à la fin du dépôt du cordon.

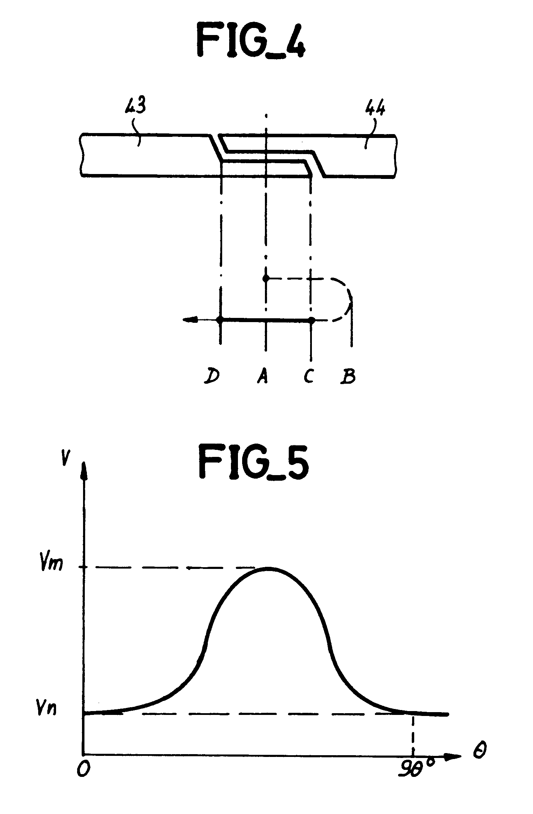

Pour éviter ces inconvénients, la présente invention propose de déplacer l'applicateur de la façon suivante: (voir figure 4) à partir du point de repos A (situé de préférence au milieu du grand côté de la surface 10) on fait effectuer à l'applicateur un déplacement en sens inverse du déplacement normal, buse fermée, jusqu'à un point B distant de 2 à 3cm par exemple du point A, puis on inverse le mouvement de l'applicateur et on augmente sa vitesse jusqu'à ce qu'elle atteigne la valeur 2Vn, cette valeur devant être atteinte avant que l'applicateur passe en un point C, situé entre A et B, à environ 1cm de A. Au point C, on ouvre la buse. La vitesse est maintenue à la valeur 2Vn jusqu'à un point D, symétrique de C par rapport à A. A partir de D, la vitesse repasse à la valeur Vn. A la fin du dépôt du cordon, lorsque l'applicateur revient au point C, on fait repasser la vitesse à la valeur 2Vn, et ce jusqu'au point D auquel on ferme la buse 18, et on arrête le mouvement de l'applicateur. Ainsi, comme représenté schématiquement en figure 4, le début du cordon 43 entre C et D a une section égale à la moitié de la valeur que l'on doit obtenir, et il est de même de la fin 44 de ce cordon entre ces mêmes points C et D. Par conséquent, on obtient entre ces deux points, aussi bien qu'en amont et en aval, un cordon de section sensiblement constante, et ce, de façon plus sûre que dans le cas où l'on partirait de A en ouvrant aussitôt la buse, ou même peu après le départ, en imposant la vitesse Vn.

Selon une variante, on peut à vitesse de déplacement constante, réguler le débit de la buse, mais un tel procédé est plus complexe à mettre en oeuvre.

## Revendications

1. Machine pour déposer un produit sur une surface horizontale plane d'un objet dans une voie fermée ayant des sections droites et au moins un coin arrondi, ladite machine comprenant :
(a) des premiers moyens pour maintenir un objet ayant une surface plane dans une position de travail dans laquelle la surface plane est horizontale ;
(b) une tuyère unique capable de déposer un produit à une vitesse déterminée, ladite tuyère unique étant disposée au-dessus de la surface plane de l'objet lorsque l'objet est dans sa position de travail et
(c) des seconds moyens pour déplacer ladite tuyère par rapport à la surface plane de l'objet dans une voie fermée ayant des sections droites et au moins un coin arrondi, **caractérisé par** lesdits seconds moyens qui sont adaptés
(i) pour déplacer ladite tuyère unique à une vitesse constante Vn pendant que ladite tuyère se déplace le long des sections droites de la voie fermée, pour augmenter la vitesse de ladite tuyère en commençant au début d'au moins un coin arrondi cité pour atteindre une vitesse maximum Vm au milieu d'au moins un coin arrondi cité et pour diminuer la vitesse de ladite tuyère unique à la valeur Vn à la fin d'au moins un coin arrondi cité, l'augmentation et la diminution de vitesse étant accomplies de manière symétrique et au moins approximativement gaussienne et
(ii) au commencement d'un circuit autour de la voie fermée pour déplacer ladite tuyère unique sur une courte distance à la vitesse 2Vm en obtenant ainsi la moitié du dépôt normal du produit sur cette courte distance et, à la fin du circuit autour de la voie fermée, de déplacer ladite tuyère unique sur la même courte distance à la vitesse 2Vn en obtenant à nouveau la moitié du dépôt normal du produit sur cette courte distance.

2. Machine selon la revendication 1, **caractérisée en ce que**
(a) le produit est fritté et que
(b) des cônes de tubes à cathode sont l'objet cité.

3. Machine selon la revendication 1, de plus **caractérisée par**
(a) des troisièmes moyens pour recevoir et saisir de manière lâche l'objet au-dessous de la position de travail de l'objet;
(b) des quatrièmes moyens pour soulever l'objet à une position prête dans laquelle sa surface plane est au moins approximativement dans sa position de travail et
(c) des cinquièmes moyens pour ajuster l'orientation de l'objet dans sa position prête si bien que la surface plane de l'objet devient horizontale et alignée précisément par rapport à ladite tuyère unique.

4. Machine selon la revendication 1**, caractérisée en ce que**
(a) l'objet a un axe et que
(b) ladite machine comprend, de plus, des septièmes moyens pour centrer l'axe de l'objet sur un axe de référence vertical.

5. Machine selon la revendication 1, **caractérisée de plus** par
(a) un dispositif de mesure qui détermine quelle est la taille de l'objet parmi un nombre prédéterminé de tailles possibles et
(b) des huitièmes moyens pour ajuster les dimensions de la voie fermée comme fonction de la taille de l'objet déterminée par ledit dispositif de mesure.

## Claims

1. Machine for depositing a product onto an even horizontal surface of an object in a closed path having straight sections and at least one rounded corner, said machine comprising :
(a) first means to maintain an object with an even surface in a working position in which the even surface is horizontal
(b) a single nozzle capable of depositing a product at a predetermined speed, said single nozzle being placed above the even surface of the object when the object is in its working position and
(c) second means to move said nozzle relatively to the even surface of the object in a closed track having straight sections and at least a rounded corner, characterized by said second means which are adapted
(i) to move said single nozzle at a constant speed Vn while said nozzle moves along straight sections of the closed track to increase the speed of said nozzle starting at the beginning of at least one mentioned rounded corner to reach a maximal speed Vm in the middle of at least one mentioned rounded corner and to reduce the speed of said single nozzle to the value Vn at the end of at least one mentioned rounded corner, the increasing and decreasing of the speed being accomplished in a symmetrical and approximately gaussian way and
(ii) at the beginning of a circuit around the closed track to move said single nozzle on a short distance at the speed 2Vm by obtaining half of the normal deposit of product on this short distance and, at the end of the circuit around the closed track, to move said single nozzle on the same short distance at the speed 2Vn by obtaining again half of the normal deposit of the product on this short distance.

2. Machine according to claim 1, characterized in that
(a) the product is frit and that
(b) cones of cathode ray tubes are said object.

3. Machine according to claim 1, further characterized by
(a) third means for receiving and loose grasping of the object below the working position of the object ;
(b) fourth means for lifting the object at a ready position in which its even surface is at least approximately in its working position and
(c) fifth means for adjusting the orientation of the object in its ready position so that the even surface of the object becomes horizontal and precisely aligned relative to said single nozzle.

4. Machine according to claim 1, characterized in that
(a) the object has an axis and that
(b) said machine further comprises seventh means for centering the axis of the object on a vertical reference axis.

5. Machine according to claim 1, further characterized by
(a) a measuring device which determines which is the size of the object among a predetermined number of possible sizes and
(b) eightth means for adjusting the dimensions of the closed path as a function of the size of the object determined by said measuring device.

## Patentansprüche

1. Maschine zum Auftragen eines Stoffes auf eine ebene, horizontale Fläche eines Gegenstandes auf einer geschlossenen Bahn, die geradlinige Abschnitte und mindestens eine abgerundete Ecke aufweist, wobei die Maschine umfaßt:
(a) ein erstes Mittel zum Halten eines eine ebene Oberfläche aufweisenden Gegenstandes in einer Arbeitsstellung, in der die ebene Fläche horizontal ist,
(b) eine einzige Düse, die in der Lage ist, einen Stoff mit einer bestimmten Geschwindigkeit aufzutragen, wobei die genannte einzige Düse oberhalb der ebenen Oberfläche des Gegenstandes angeordnet ist, wenn sich der Gegenstand in der Arbeitsstellung befindet, und
(c) zweite Mittel zum Bewegen der genannten Düse relativ zur ebenen Oberfläche des Gegenstandes auf einer geschlossenen Bahn, die gerade Abschnitte und mindestens eine abgerundete Ecke aufweist, gekennzeichnet durch die zweiten Mittel, die dazu eingerichtet sind
(i) die genannte einzige Düse mit einer konstanten Geschwindigkeit Vn zu bewegen, während sich die genannte Düse den geraden Abschnitten der geschlossenen Bahn entlang bewegt, um dann die Geschwindigkeit der genannten Düse zu erhöhen, womit am Anfang mindestens einer genannten abgerundeten Ecke begonnen wird, und in der Mitte mindestens einer genannten abgerundeten Ecke eine Maximalgeschwindigkeit Vm zu erreichen, und um die Geschwindigkeit der genannten einzigen Düse am Ende mindestens einer genannten abgerundeten Ecke auf den Wert Vn zu verringern, wobei die Erhöhung und die Verringerung der Geschwindigkeit symmetrisch und mindestens annähernd einer Gaußschen Kurve entsprechend erfolgt, und
(ii) um zu Beginn eines Umlaufes auf der geschlossenen Bahn die genannte einzige Düse auf einer kurzen Strecke mit der Geschwindigkeit 2Vm zu bewegen und dabei die Hälfte des normalen Auftrags des Stoffes auf dieser kurzen Strecke zu erreichen, und am Ende des Umlaufes auf der geschlossenen Bahn die genannte einzige Düse auf derselben kurzen Strecke mit der Geschwindigkeit 2Vn zu bewegen und dabei erneut die Hälfte des normalen Auftrages des Stoffes auf dieser kurzen Strecke zu erreichen.

2. Maschine gemäß Patentanspruch 1, **dadurch gekennzeichnet, daß**
(a) der Stoff Glasmasse ist und daß
(b) Kolben von Kathodenstrahlröhren der genannte Gegenstand sind.

3. Maschine gemäß Patentanspruch 1, außerdem **gekennzeichnet** durch
(a) dritte Mittel zur Aufnahme und zum lockeren Halten des Gegenstandes unterhalb der Arbeitsstellung des Gegenstandes;
(b) vierte Mittel zum Anheben des Gegenstandes in eine Bereitschaftsstellung, in der sich seine ebene Fläche mindestens näherungsweise in seiner Arbeitsstellung befindet und
(c) fünfte Mittel zur Justierung der Ausrichtung des Gegenstandes in seiner Bereitschaftsstellung, so daß die ebene Fläche des Gegenstandes horizontal und präzise relativ zur genannten einzigen Düse ausgerichtet wird.

4. Maschine gemäß Patentanspruch 1, **dadurch gekennzeichnet,** **daß**
(a) der Gegenstand eine Achse aufweist und daß
(b) die genannte Maschine außerdem siebte Mittel zur Zentrierung der Achse des Gegenstandes auf einer vertikalen Bezugsachse umfaßt.

5. Maschine gemäß Patentanspruch 1, außerdem **gekennzeichnet** durch
(a) eine Meßvorrichtung, die feststellt, welches die Größe des Gegenstandes aus einer vorbestimmten Anzahl möglicher Größen ist und
(b) achte Mittel zur Justierung der Abmessungen der geschlossenen Bahn in Abhängigkeit von der Größe des Gegenstandes, die die genannte Meßvorrichtung festgestellt hat.
